Europäisches Patentamt

European Patent Office

Office européen des brevets

(11) Publication number: **0 232 018**
**A2**

## EUROPEAN PATENT APPLICATION

(21) Application number: 87300236.4

(22) Date of filing: 12.01.87

(51) Int. Cl.⁴: **B 23 P 19/06**

(30) Priority: 03.02.86 US 825610

(43) Date of publication of application:
12.08.87 Bulletin 87/33

(84) Designated Contracting States: DE FR GB IT

(71) Applicant: GENERAL MOTORS CORPORATION
General Motors Building 3044 West Grand Boulevard
Detroit Michigan 48202 (US)

(72) Inventor: Monnier, David John
3259 Shadowbrook Drive
Indianapolis Indiana 46224 (US)

Schmidt, Michael William
260 North Richie Street
Indianapolis Indiana 46234 (US)

(74) Representative: Breakwell, John Neil Bower et al
GM Patent Section Vauxhall Motors Limited Luton Office
(F6) P.O. Box No. 3 Kimpton Road
Luton Bedfordshire LU2 OSY (GB)

(54) Nut runner mechanism.

(57) A machine tool has two nut runner spindle assemblies (40.42) for tightening two threaded fasteners (54,56) simultaneously. One nut runner spindle (40) is maintained in a fixed position on a slide member (32) which forms a slidable support for the other nut runner spindle (42). The slide member is secured to a movable portion of a base or robot member (I0) so that the nut runner spindles can be positioned to engage with pairs of fasteners (54,56) disposed at various centre distances.

Fig. 1

Bundesdruckerei Berlin

**Description**

NUT RUNNER MECHANISM

This invention relates to machine tools having nut runner spindles for effecting rotation of corresponding threaded fasteners.

Nut runner spindles have been utilised with machine tools for automatically installing threaded fasteners such as screws or bolts in assemblies. Such assemblies vary in size and shape, and may include elements such as control pump housings for automatic transmissions, control valve assemblies or engine oil pan assemblies.

The nut runner spindle mechanisms have been of various kinds, from single manually operated mechanisms to multi-spindle mechanisms. These multi-spindle mechanisms, although efficient, are designed for a specific bolt pattern. That is, such multi-spindle mechanisms have fixed spindle locations, and in practice the effort, time and material needed to effect a change in the bolt pattern or spindle location are considerable. Therefore, the multi-spindle nut runners are generally dedicated machines, designed to operate on one bolt pattern, such that a separate multi-spindle mechanism must be installed if operation on another bolt pattern is required.

The present invention is concerned with providing a machine tool in the form of a dual-spindle nut runner mechanism operable for the simultaneous installation of two threaded fasteners and capable of accommodating an indefinite number of bolt patterns within a predetermined range.

To this end, a machine tool in accordance with the present invention comprises the combination of features specified in claim I.

The present invention thereby makes available an improved multi-spindle nut runner type of machine tool wherein two nut runner spindles are disposed on a slide member with one nut runner spindle having a fixed location and the other being linearly movable relative thereto, and wherein the slide member is operatively connected to a base member for manipulation thereby to a plurality of work positions.

The invention also makes available an improved dual-spindle nut runner type of machine tool wherein two nut runner spindles are disposed on a slide member that is connected to a robot by way of a joint having a stiffness to rotation about the joint which is substantially less than the rotational stiffness of the nut runner spindle assembly, and wherein one of the spindles is movable relative to the other and the slide member is movable relative to the robot such that a plurality of work positions can be attained by the nut runner spindles.

In a preferred embodiment of a dual-spindle nut-runner type of machine tool in accordance with the present invention, one nut runner spindle is fixed on a slide member and another nut runner spindle is slidably disposed on the slide member to permit adjustment between the centre-lines of the two spindles. The slide member is operatively connected to a robot or base tool member in a rotatable manner to further accommodate positioning of the nut runner spindles. The robot or base tool member is preferably a programmable member which is operable to position the slide member at a plurality of positions, to further increase the range of work area over which the nut runner spindles are operable.

In this preferred embodiment, also, the dual nut runner spindles and the slide member have a rotational stiffness which is substantially greater than the rotational stiffness of the connecting joints in the robot or base tool member. This feature makes it possible for the dual spindle nut runners and accompanying slides to effectively absorb substantially all the reaction torque generated during tightening of threaded fasteners. Due to the versatility of the dual spindle nut runner mechanism, a variety of bolt patterns can be accommodated by a single machine.

In the drawing:

Figure I is a diagrammatic view of a preferred embodiment of a machine tool in accordance with the present invention, comprising a dual-spindle nut runner and a base member;

Figure 2 is a view on the line 2--2 of Figure I, in the direction of the arrows, showing a workpiece having a random bolt pattern; and

Figure 3 is an isometric diagrammatic representation of the nut runner spindles and a slide member assembly, together with the equation for the force balance on the slide member assembly.

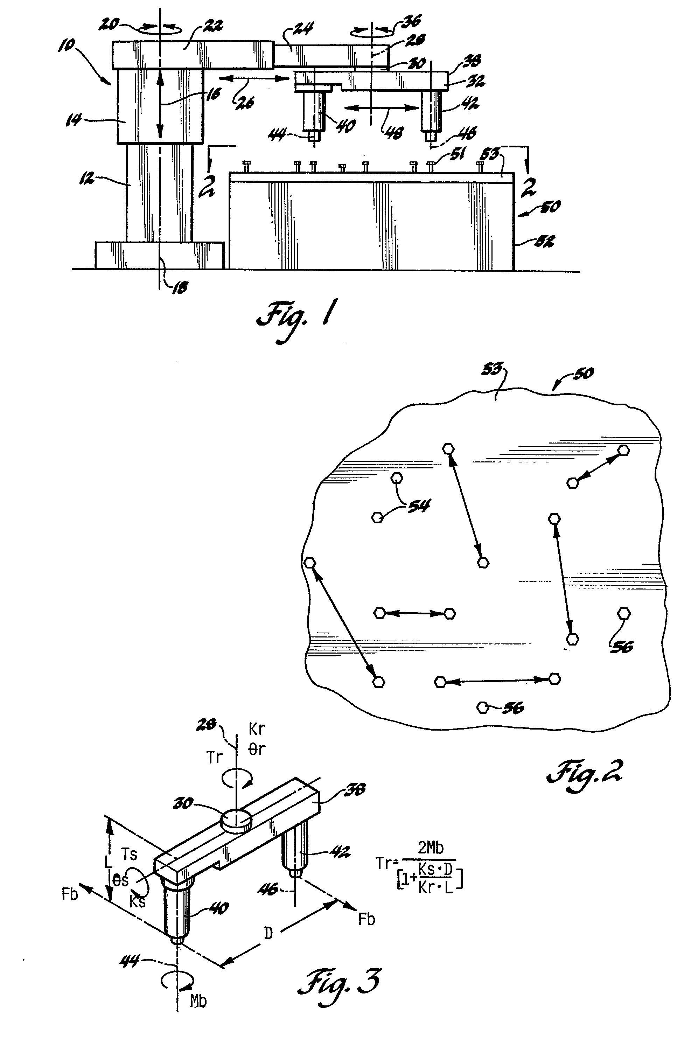

With reference now to the drawing, there is shown in Figure I a robot or base member I0 having an upright pedestal I2 on which is disposed a body I4 capable of vertical movement, as represented by an arrow I6. The body I4 is rotatable about a centre-line or vertical axis I8 of the pedestal I2, as depicted by an arrow 20.

The body I4 includes a support arm 22 which is connected to a movable arm 24. The movable arm 24 is movable in a horizontal direction relative to the support arm 22, as depicted by an arrow 26. The movable arm 24 has a vertical axis 28 about which a rotatable joint 30 forms a connection to a slide assembly 32. The rotatable joint 30 permits rotary movement of the slide assembly 32 relative to the movable arm 24 about the vertical axis 28, as depicted by an arrow 36.

The slide assembly 32 includes a slide 38 and a pair of nut runner spindles 40 and 42. The nut runner spindle 40 is secured to the slide 38 on a vertical axis 44, and the nut runner spindle 42 has a vertical axis 46 which is movable linearly along the slide 38, as depicted by an arrow 48. Thus the nut runner spindle 42 can be moved towards and away from the nut runner spindle 40. The nut runner spindles 40 and 42 can accordingly be manipulated by the movement of the components of the robot I0 to a plurality of positions such that virtually any two threaded fasteners whose centre-lines are within the range of movement depicted by the arrow 48 can be aligned with the nut runner spindles 40 and 42.

A workpiece 50 has associated therewith a plurality of screw-threaded fasteners such as 5l. These fasteners are to be operated on by the dual nut runner spindles 40 and 42 to secure a cover 53 of the workpiece 50 to a base component 52.

Figure 2 shows a pattern of threaded fasteners 5l on the workpiece 50. It is assumed that the design of the slide 38 is such that the minimum distance between the nut runner spindles 40 and 42 within the range of movement 48 is the same as the distance designated 54 between a pair of the threaded fasteners, and it is further assumed that the maximum separation possible between the nut runner spindles 40 and 42 is equal to the distance designated 56 between a pair of the threaded fasteners.

The slide 38 and the nut runner spindles 40 and 42 attached thereto can be adjusted or moved by the robot l0 and a pre-programmed device, operating in a well-known manner, so as to accommodate the simultaneous tightening of the pair of threaded fasteners 56, and likewise adjustment can be made for the simultaneous tightening of the pair of threaded fasteners 54. Various other pairs of threaded fasteners which can be tightened by the nut runners with appropriate positioning of the slide assembly are shown joined by arrows.

Virtually any combination of threaded fasteners can be accommodated by a nut runner mechanism in accordance with the present invention. In order to provide a more flexible or versatile machine, it is possible to utilise a three-axis wrist mechanism such as that shown in US-A-4 402 234 in place of the simple rotary joint 30. Correspondingly, such a wrist mechanism may also accommodate the connection between the body l4 and the support arm 22, and to provide further flexibility the connection between the support arm 22 and the movable arm 24 may also comprise a three-axis wrist mechanism.

This type of arrangement would permit the slide assembly 32 to be moved to virtually any position within a hemispherical envelope disposed about the vertical axis l8 of the pedestal l2. Also, it will be evident from the above description that a change in the different workpieces or different bolt patterns can be accommodated simply by a change in the software (program) for the operating mechanism for the robot.

Figure 3 shows the slide 38, the nut runner spindles 40 and 42 and the joint member 30. Also shown in Figure 3 is an equation for the torque $T_r$ applied about the last robot joint. This equation indicates that the torque $T_r$ is equal to twice the torque applied from the bolt to the nut runner spindle $M_b$ divided by the quantity l (unity) plus the ratio of rotational stiffness about the nut runner spindle $K_s$ times the distance between the spindles D and the rotational stiffness about the robot joint $K_r$ times the distance from the spindle support to the bolt L.

The other elements shown in Figure 3 are: $F_b$, which is the reaction torque applied from the bolt to the nut runner spindle; $\theta_r$, which is the rotational deflection about the robot joint; $\theta_s$, which is the

effective rotation about the spindle to slide connection; and $T_s$, which is the bending moment applied to the nut runner spindle.

From the equation for $T_r$ it will be evident that the torque applied to the robot joint can be controlled by making $K_s$ substantially greater than $K_r$, and also by designing D and L such that D is always greater than L. In controlling these factors, the reaction forces will be absorbed (grounded) through the dual spindle nut runner mechanism instead of through the robot.

## Claims

l. A machine tool for tightening threaded fasteners on an assembly, comprising: a base member (l0) having a movable arm (24); single joint means (30) connected to the arm (24); a slide member (32) operatively connected to the single joint means (30); a first nut runner means (40) secured to the slide member (32); and a second nut runner means (42) slidably disposed on the slide member (32) and selectively positionable thereon relative to the first nut runner means (40), whereby the movable arm (24), the single joint means (30), the slide member (32) and the second nut runner means (42) are effective to co-operate to align and engage the first (40) and second (42) nut runner means with corresponding pairs of the threaded fasteners (54,56) for the simultaneous tightening thereof.

2. A machine tool according to claim l, characterised in that the base member (l0) comprises robot means, and that the slide member (32) is positionable over a workpiece (50) constituting the said assembly by movement of the movable arm (24).

3. A machine tool according to claim l or 2, characterised in that the single joint means (30) forms part of robot means (l0) and is operable to position the first (40) and second (42) nut runner means for engagement with the pairs of threaded fasteners (54,56), and that the joint means (30), the slide member (32) and the nut runner means (40,42) have rotational stiffness factors such that the rotational stiffness factor of the joint means (30) is less than the rotational stiffness factor of the slide member (32) and the nut runner means (40,42).

0232018

Fig. 1

Fig. 2

$$Tr = \frac{2Mb}{\left[1 + \frac{Ks \cdot D}{Kr \cdot L}\right]}$$

Fig. 3